(19) Europäisches Patentamt
European Patent Office
Office européen des brevets

(11) **EP 3 495 193 B1**

(12) **EUROPÄISCHE PATENTSCHRIFT**

(45) Veröffentlichungstag und Bekanntmachung des Hinweises auf die Patenterteilung:
**18.01.2023 Patentblatt 2023/03**

(21) Anmeldenummer: **18206096.2**

(22) Anmeldetag: **14.11.2018**

(51) Internationale Patentklassifikation (IPC):
**B60W 30/182** *(2020.01)*   **B60L 15/20** *(2006.01)*
**B60L 7/18** *(2006.01)*   **B60W 30/18** *(2012.01)*

(52) Gemeinsame Patentklassifikation (CPC):
**B60L 15/2018; B60L 7/18; B60L 15/2009;**
**B60W 30/18072; B60W 30/18127; B60W 30/182;**
B60L 2240/12; B60L 2240/14; B60L 2240/26;
B60L 2240/34; B60L 2240/507; B60L 2240/622;
B60L 2240/642; B60L 2240/645; B60L 2240/662;

(Forts.)

(54) **VERFAHREN ZUM BETREIBEN EINES KRAFTFAHRZEUGS**

METHOD FOR OPERATING A MOTOR VEHICLE

PROCÉDÉ DE FONCTIONNEMENT D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2017 DE 102017129018**

(43) Veröffentlichungstag der Anmeldung:
**12.06.2019 Patentblatt 2019/24**

(73) Patentinhaber: **MAN Truck & Bus SE**
**80995 München (DE)**

(72) Erfinder:
• **Schydlo, Alexander**
  **81243 München (DE)**
• **Martens, Robert**
  **85757 Karlsfeld (DE)**

(74) Vertreter: **v. Bezold & Partner Patentanwälte - PartG mbB**
**Ridlerstraße 57**
**80339 München (DE)**

(56) Entgegenhaltungen:
WO-A1-2013/034729   CA-A1- 2 997 232
DE-A1-102015 201 904   DE-A1-102016 200 113
JP-A- 2016 130 105   US-A1- 2005 228 553
US-A1- 2011 309 926   US-A1- 2013 289 874
US-A1- 2014 371 974   US-A1- 2015 061 550

(52) Gemeinsame Patentklassifikation (CPC): (Forts.)
B60L 2240/665; B60L 2240/667; B60L 2240/68;
B60L 2240/70; B60L 2260/24; B60L 2260/44;
B60L 2260/54; B60W 2030/1809; Y02T 10/60;
Y02T 10/64; Y02T 10/72; Y02T 90/16

(52) Gemeinsame Patentklassifikation (CPC): (Forts.)
B60L 2240/665; B60L 2240/667; B60L 2240/68;
B60L 2240/70; B60L 2260/24; B60L 2260/44;

**Beschreibung**

Die Erfindung betrifft ein Verfahren zum Betreiben eines Kraftfahrzeugs mit einer Traktionsbatterie zum Antreiben des Kraftfahrzeugs und einer Rekuperationseinrichtung zum Laden der Traktionsbatterie durch Energierückgewinnung.

Zum Erhöhen der elektrischen Reichweite eines elektrifizierten Fahrzeugs kann während des Betriebs des Kraftfahrzeugs Energie durch Rekuperation zurückgewonnen werden. Hierbei kann ein Generator / eine Rekuperationseinrichtung des Kraftfahrzeugs beim Verzögern des Kraftfahrzeugs kinetische Energie in elektrische Energie wandeln und in einer Traktionsbatterie des Kraftfahrzeugs speichern.

Die DE 10 2012 224 170 A1 offenbart ein Gerät und ein Verfahren zum Steuern des Fahrbetriebs eines Fahrzeugs unter Freilaufbedingungen. Das Gerät kann einen Fahrzeuggeschwindigkeitsdetektor, einen Freilauf-Reichweiten-Operator und eine Steuerung enthalten. Der Fahrzeuggeschwindigkeitsdetektor erfasst die aktuelle Fahrzeuggeschwindigkeit, wenn sowohl Signale von einem Gaspedal-Positionssensor als auch einem Bremspedal-Positionssensor null sind. Der Freilauf-Reichweiten-Operator bestimmt, ob der Freilaufmodus möglich ist oder nicht, indem der aktuelle Ort des Fahrzeugs, die Straßenbedingungen und Ortsinformationen und Informationen bezüglich des Abstands zwischen den Fahrzeugen empfangen werden, wenn die aktuelle Fahrzeuggeschwindigkeit gleich oder höher ist als eine bestimmte Geschwindigkeit. Die Steuerung schaltet einen Elektromotor als Reaktion auf die Bestimmung, dass der Freilaufmodus möglich ist, ab, wenn der Abstand zwischen dem Fahrzeug und einem vorausfahrenden Fahrzeug gleich oder größer ist als der vorgegebene Abstand.

Die DE 11 2013 004 514 T5 offenbart ein Verfahren und ein System zur Erkennung kostenloser Energie und Nutzung der kostenlosen Energie in mindestens einem fahrzeugseitigen System. Das Verfahren umfasst eine Simulation von mindestens einem zukünftigen Geschwindigkeitsprofil auf einem vor einem Fahrzeug liegenden Straßenabschnitt auf der Grundlage von Informationen über den Straßenabschnitt. Das Verfahren umfasst eine Erkennung auf der Grundlage mindestens eines zukünftigen Geschwindigkeitsprofils, ob auf dem Straßenabschnitt kostenlose Energie für das Fahrzeug verfügbar sein wird. Verfügbare kostenlose Energie ist als überschüssige Energie definiert, die das Fahrzeug in einem simulierten Zeitraum des Rollens und bei einem simulierten aktiven Bremsvorgang hat, wenn dem simulierten Zeitraum des Rollens der simulierte aktive Bremsvorgang folgt. Das Verfahren umfasst auch eine Nutzung der verfügbaren kostenlosen Energie zum Auffüllen mindestens eines Energiespeichers in mindestens einem fahrzeugseitigen System, das Energie aus einem Antriebsstrang des Fahrzeugs bezieht.

Aus der US 2016/0052519 A1 ist bekannt, ein elektrifiziertes Fahrzeug mit einem manuellen Freilaufschalter auszustatten.

Die US 2015/061550 A1 offenbart ein Verfahren zur elektrischen Regeneration eines elektrischen Energiespeichers in einem Kraftfahrzeug mit einer Rekuperationseinrichtung. Es wird basierend auf Informationen über eine vorausliegende Fahrtroute ermittelt, ob eine geeignete Gelegenheit für eine elektrische Regeneration auf der vorausliegenden Fahrtroute existiert. Wenn dies der Fall ist, wird ein erster Energieverlust bestimmt, der bei der elektrischen Regeneration auftritt. Es wird ein zweiter Energieverlust bestimmt, der auf einer Mehrzahl von zuvor bestimmten und festgelegten Strecken aufgrund von mittels Regeneration reversiblen Alterungseffekten des Energiespeichers entsteht. Es werden der erste und der zweite Energieverlust verglichen. Eine Regeneration wird nur durchgeführt, wenn der zweite Energieverlust größer als der erste Energieverlust ist.

Die DE 10 2015 201904 A1 offenbart ein Verfahren zum Betreiben eines Hybridfahrzeugs, bei welchem eine aktuelle Betriebsstrategie Segeln des Hybridfahrzeugs durch eine Betätigung eines Bremspedals gesteuert verlassen wird und ein Schließen eines Antriebsstranges des Hybridfahrzeugs erfolgt. Nach dem Schließen des Antriebsstranges wird kinetische Energie des Hybridfahrzeugs zur Rekuperation genutzt. Für den Fall, dass im Ergebnis einer Prüfung festgestellt wird, dass durch eine Verringerung einer zum Schließen des Antriebsstrangs benötigten Zeit (oder durch Verringerung des Verlustes an kinetischer Energie) durch einen Einsatz einer elektrischen Unterstützung ein durch die Rekuperation zu erzielender Energiewert verbessert werden kann, erfolgt der Einsatz der elektrischen Unterstützung.

Die US 2011/309926 A1 offenbart ein Verfahren zur Ermittlung einer energieverbrauchsoptimierten Route eines Kraftfahrzeugs von einem Startpunkt zu einem Zielpunkt, wobei mindestens einer aufgrund von Kartendaten ermittelten möglichen Route vom Startpunkt zum Zielpunkt ein voraussichtlicher Energieverbrauch unter Berücksichtigung einer Bremsstrategie zugeordnet wird und unter mehreren möglichen Routen eine energieverbrauchsoptimierte Route ermittelt wird.

Die CA 2 997 232 A1 offenbart ein Verfahren zur Steuerung der Fahrzeugfahrt. Es wird eine von Trägheitsfahrt durchgeführt, wenn vorhergesagt wird, dass ein erster Kraftstoffverbrauchsreduzierungseffekt durch eine Trägheitsfahrt einem zweiten Kraftstoffverbrauchsreduzierungseffekt durch Verzögerungsenergieregeneration überlegen ist. Es wird eine Verzögerungsenergieregeneration durchgeführt, wenn vorhergesagt wird, dass der erste Kraftstoffverbrauchsreduzierungseffekt durch die Trägheitsfahrt dem zweiten Kraftstoffverbrauchsreduzierungseffekt durch die Verzögerungsenergieregeneration nicht überlegen ist.

Der Erfindung liegt die Aufgabe zu Grunde, ein verbessertes oder alternatives Verfahren zum Betreiben eines Kraftfahrzeugs mit Traktionsbatterie und Rekuperationseinrichtung vorzusehen. Insbesondere soll eine Reichweite und/oder einen Gesamtwirkungsgrad des Kraftfahrzeugs erhöht und/oder Fahrsicherheitsaspekte berücksichtigt werden.

Die Aufgabe wird gelöst durch ein Verfahren gemäß dem unabhängigen Anspruch. Vorteilhafte Weiterbildungen sind in den abhängigen Ansprüchen und der Beschreibung angegeben.

Das Verfahren dient zum Betreiben eines Kraftfahrzeugs mit einer Traktionsbatterie zum Antreiben des Kraftfahrzeugs und einer Rekuperationseinrichtung zum Laden der Traktionsbatterie durch Energierückgewinnung. Das Verfahren weist ein Bereitstellen eines Rekuperationsmodus der Rekuperationseinrichtung zum Laden der Traktionsbatterie auf. Das Verfahren weist ein Bereitstellen eines Freilaufmodus des Kraftfahrzeugs ohne Rekuperation der Rekuperationseinrichtung auf. Das Verfahren weist ein Auswählen eines Betriebsmodus des Kraftfahrzeugs aus dem Freilaufmodus und dem Rekuperationsmodus in Abhängigkeit von einer (Gesamt-) Energiebilanz und/oder einer Exergiebilanz der Kraftfahrzeugs auf. Das Verfahren weist ein Betreiben des Kraftfahrzeugs in dem ausgewählten Betriebsmodus auf.

Exergie bezeichnet den Teil der Gesamtenergie eines Systems, der Arbeit verrichten kann, wenn dieses System in das thermodynamische (thermische, mechanische und chemische) Gleichgewicht mit seiner Umgebung gebracht wird.

Das Verfahren bietet den Vorteil, dass aus mehreren verfügbaren Betriebsmodi derjenige Betriebsmodi ausgewählt werden kann, der bspw. als am energetisch sinnvollsten oder als am sichersten bewertet wird. Damit wird ermöglicht, dass bspw. ein Rekuperationsmodus mit hoher Rekuperationsrate gewählt wird, wenn eine große Verzögerung des Kraftfahrzeugs gewünscht ist, bevorsteht oder prognostiziert wird (zum Beispiel Stau voraus). Ebenso wird ermöglicht, dass beispielsweise der Freilaufmodus gewählt wird, wenn auf ebener Straße ohne Steigung und Gefälle eine möglichst kleine Verzögerung des Kraftfahrzeugs gewünscht ist, da das Kraftfahrzeug beispielsweise auf einer Autobahn nicht unnötig abgebremst werden soll. Das Aufstellen einer Energiebilanz und/oder einer Exergiebilanz des Kraftfahrzeugs ermöglicht, dass derjenige Betriebsmodus ausgewählt wird, der energetisch am sinnvollsten ist. Basierend auf der Energiebilanz und/oder der Exergiebilanz können Energien und/oder Exergien für den Freilaufmodus und den Rekuperationsmodus prognostiziert werden. Anschließend kann bspw. der energetisch beste Betriebsmodus ausgewählt werden.

Insbesondere kann das Verfahren zum Betreiben eines Kraftfahrzeugs unter Freilaufbedingungen dienen, wobei weder ein Gashebel des Kraftfahrzeugs noch ein Bremshebel des Kraftfahrzeugs betätigt ist.

Vorzugsweise kann im Freilaufmodus die Rekuperationseinrichtung abgeschaltet sein und/oder eine Kupplung im Antriebsstrang zum Verringern eines Widerstands geöffnet werden. Die Kupplung kann bspw. trieblich zwischen einem Elektroantrieb (z. B. einem Elektromotor) des Kraftfahrzeugs und einem Rad des Kraftfahrzeugs angeordnet sein.

Beispielsweise kann die Rekuperationseinrichtung Teil eines Elektroantriebs des Kraftfahrzeugs sein, der mindestens einen Elektromotorgenerator aufweist.

Erfindungsgemäß weist die Energiebilanz und/oder die Exergiebilanz des Kraftfahrzeugs Fahrzeugdaten und Umgebungsklimadaten auf. Fahrzeugdaten können beispielsweise eine momentane Fahrzeuggeschwindigkeit, eine momentane Fahrzeugbeschleunigung und eine momentane Fahrzeugmasse aufweisen. Umgebungsklimadaten weisen eine Umgebungstemperatur und eine Sonneneinstrahlung sowie bspw. eine Windrichtung und eine Windstärke auf.

In einem Ausführungsbeispiel ist das Auswählen eines Betriebsmodus abhängig von einer ermittelten Freilaufenergie und/oder Freilaufexergie sowie von einer ermittelten Regenerationsenergie und/oder Regenerationsexergie.

Insbesondere kann das Auswählen des Betriebsmodus in Abhängigkeit von der Energiebilanz und/oder der Exergiebilanz das Vergleichen einer berechneten Freilaufenergie und/oder -exergie mit einer berechneten Rekuperationsenergie und/oder -exergie aufweisen.

In einer besonders bevorzugten Ausführungsform ist das Auswählen eines Betriebsmodus abhängig von einer momentanen Fahrsituation des Kraftfahrzeugs und/oder einer prognostizierten Fahrsituation des Kraftfahrzeugs. Damit kann beispielsweise abhängig von der Energiebilanz und/oder Exergiebilanz des Kraftfahrzeugs, der momentanen Fahrsituation und der prognostizierten Fahrsituation des Kraftfahrzeugs der insbesondere unter energetischen Gesichtspunkten geeignetste Betriebsmodus ausgewählt werden. Hierbei werden insbesondere Verzögerungsbedingungen (zum Beispiel Stau, Steigungen usw.) und Beschleunigungsbedingungen (zum Beispiel Stauauflösung, Gefälle usw.) berücksichtigt. Damit kann bei einer prognostizierten Verzögerung eher ein Rekuperationsmodus ausgewählt werden, während bei einer prognostizierten Beschleunigung eher der Freilaufmodus ausgewählt wird, um das Kraftfahrzeug nicht unnötig abzubremsen.

In einer Ausführungsform wird die momentane Fahrsituation abhängig von einer momentanen Straßenverkehrslage und/oder die prognostizierte Fahrsituation abhängig von einer prognostizierten Straßenverkehrslage ermittelt. Die Straßenverkehrslage kann sich auf Informationen zu einem Verkehrsfluss, Staus, Abständen zwischen den Fahrzeugen, Geschwindigkeiten von vorausfahrenden Fahrzeugen usw. beziehen. Diese Informationen können beispielsweise über eine Kommunikationsschnittstelle des Kraftfahrzeugs empfangen werden. Es ist auch möglich, dass das Kraftfahrzeug eigene Systeme und Einrichtungen zum Erfassen zumindest einiger dieser Informationen aufweist.

In einer weiteren Ausführungsform wird die momentane Fahrsituation abhängig von einer momentanen Straßentopologie und/oder die prognostizierte Fahrsituation abhängig von einer prognostizierten Straßentopologie ermittelt.

Die Straßentopologie kann sich auf Informationen zu einem Gefälle, einer Steigung, einem Verlauf, einem Kurvenradius, einer Kreuzung usw. beziehen.

In einer Ausführungsvariante wird die momentane Fahrsituation abhängig von einem momentanen Abstand zwischen dem Kraftfahrzeug und einem hinterherfahrenden Fahrzeug und/oder die prognostizierte Fahrsituation abhängig von einem prognostizierten Abstand zwischen dem Kraftfahrzeug und einem hinterherfahrenden Fahrzeug ermittelt. Damit können auch Fahrsicherheitsüberlegungen beim Auswählen des geeigneten Betriebsmodus berücksichtigt werden. Beispielsweise kann von einem in der Fahrsituation energetisch zu bevorzugendem Rekuperationsmodus des Kraftfahrzeugs abgesehen werden, wenn ein Abstand zu einem hinterherfahrenden Fahrzeug zu gering ist und somit die Gefahr eines Auffahrunfalls besteht.

In einer weiteren Ausführungsvariante wird die momentane Fahrsituation abhängig von einem momentanen Abstand zwischen dem Kraftfahrzeug und einem vorausfahrenden Fahrzeug und/oder die prognostizierte Fahrsituation abhängig von einem prognostizierten Abstand zwischen dem Kraftfahrzeug und einem vorausfahrenden Fahrzeug ermittelt. Beispielsweise kann von einem in der Fahrsituation energetisch zu bevorzugendem Freilaufmodus des Kraftfahrzeugs abgesehen werden, wenn ein Abstand zu einem vorausfahrenden Fahrzeug zu gering ist und somit die Gefahr eines Auffahrunfalls besteht.

In einem Ausführungsbeispiel wird die momentane Fahrsituation abhängig von mindestens einer momentanen Straßenverkehrsregel und/oder die prognostizierte Fahrsituation abhängig von mindestens einer prognostizierten Straßenverkehrsregel ermittelt. Die mindestens eine Verkehrsregel kann bspw. eine Geschwindigkeitsbegrenzung und eine Vorfahrtregelung aufweisen.

In einem besonderes bevorzugten Ausführungsbeispiel ist der Rekuperationsmodus mit unterschiedlich hoher Rekuperation, insbesondere Rekuperationsraten, zum Laden der Traktionsbatterie ausführbar. Vorzugsweise kann dann eine Rekuperation des Rekuperationsmodus (bei Auswahl des Rekuperationsmodus als Betriebsmodus) in Abhängigkeit von der Energiebilanz des Kraftfahrzeugs, der Exergiebilanz des Kraftfahrzeugs, einer Freilaufenergie des Kraftfahrzeugs, einer Freilaufexergie des Kraftfahrzeugs, einer Regenerationsenergie des Kraftfahrzeugs, einer Regenerationsexergie des Kraftfahrzeugs, einer momentanen und/oder prognostizierten Fahrsituation des Kraftfahrzeugs, einer momentanen und/oder prognostizierten Straßenverkehrslage, einem momentanen und/oder prognostizierten Abstand zwischen dem Kraftfahrzeug und einem hinterherfahrenden Fahrzeug und/oder einem momentanen und/oder prognostizierten Abstand zwischen dem Kraftfahrzeug und einem vorausfahrenden Fahrzeug ausgewählt werden. Ziel kann es beispielsweise sein, in einem prognostizierten Bremsbetrieb des Kraftfahrzeugs die maximale kinetische Energie zu gewinnen.

In einem weiteren Ausführungsbeispiel wird eine momentane Straßentopologie, insbesondere ein momentanes Gefälle oder eine momentane Steigung, von einem Neigungssensor des Kraftfahrzeugs erfasst.

Es ist auch möglich, dass eine momentane Straßenverkehrslage, eine momentane Straßentopologie, ein momentaner Abstand zu einem dem Kraftfahrzeug hinterherfahrenden Fahrzeug und/oder ein momentaner Abstand zu einem dem Kraftfahrzeug vorausfahrenden Fahrzeug von einem Kamerasystem des Kraftfahrzeugs erfasst wird. Über ein mit dem Kamerasystem verbundenes Bilderkennungssystem können die gewünschten Informationen aus den Aufnahmen des Kamerasystems extrahiert werden, z. B. mittels vorbestimmter Bilderkennungsalgorithmen.

In einer bevorzugten Ausführungsvariante wird das Auswählen des Betriebsmodus von einem prädiktiven System, insbesondere zur Prognose einer zukünftigen Straßenverkehrslage, einer zukünftigen Straßentopologie und/oder mindestens einer zukünftigen Verkehrsregel, ausgeführt.

In einer Weiterbildung ist das prädiktive System selbstlernend oder nicht-selbstlernend.

In einer Weiterbildung weist das prädiktive System ein künstliches neuronales Netz auf.

Es ist bspw. auch möglich, dass das Auswählen eines Betriebsmodus abhängig von einem Verschleißzustand des Kraftfahrzeugs ist. Z. B. kann die Traktionsbatterie des Kraftfahrzeugs schon eine Anzahl von Ladezyklen aufweisen, die einen vorgegeben Grenzwert überschreitet. Um die Traktionsbatterie zu schonen kann dann bspw. auf eine nur kurze Rekuperation verzichtet und stattdessen der Freilaufmodus gewählt werden.

Erfindungsgemäß weist das Auswählen des Betriebsmodus ein Prognostizieren einer zukünftigen Fahrstrecke des Kraftfahrzeugs mit zukünftigen Beschleunigungs- und/oder Verzögerungsbedingungen auf der zukünftigen Fahrstrecke auf. Zusätzlich werden eine (prognostizierte) Freilaufenergie und/oder Freilaufexergie zum Zurücklegen der prognostizierten zukünftigen Fahrstrecke und eine (prognostizierte) Rekuperationsenergie und/oder Rekuperationsexergie zum Zurücklegen der prognostizierten zukünftigen Fahrstrecke ermittelt. Der Betriebsmodus des Kraftfahrzeugs wird in Abhängigkeit von der ermittelten Freilaufenergie und/oder der ermittelten Freilaufexergie sowie der ermittelten Rekuperationsenergie und/oder der ermittelten Rekuperationsexergie ausgewählt.

Erfindungsgemäß werden die zukünftigen Beschleunigungs- und/oder Verzögerungsbedingungen auf der zukünftigen Fahrstrecke in Abhängigkeit von einer Straßenverkehrslage, einer Straßentopologie, mindestens einer Verkehrsregel, einem Abstand zu einem vorausfahrenden Fahrzeug und einem Abstand zu einem hinterherfahrenden Fahrzeug prognostiziert. Vorzugsweise können die Freilaufenergie und die Rekuperationsenergie auf Basis einer Energiebilanz des Kraftfahrzeugs ermittelt werden.

Insbesondere können die Freilaufexergie und die Rekuperationsexergie auf Basis einer Exergiebilanz des Kraftfahrzeugs ermittelt werden.

Vorzugsweise kann eine Streckenlänge der prognostizierten zukünftigen Fahrstrecke einstellbar und/oder von einer aktuellen Fahrzeuggeschwindigkeit des Kraftfahrzeugs abhängig sein.

Die Erfindung betrifft auch ein Kraftfahrzeug, insbesondere ein Nutzfahrzeug (z. B. Omnibus oder Lastkraftwagen), mit einer Steuereinheit, die zum Ausführen des Verfahrens wie hierin offenbart ausgebildet ist.

Das Kraftfahrzeug kann insbesondere als ein Hybridelektrofahrzeug, ein Elektrokraftfahrzeug oder ein Brennstoffzellenkraftfahrzeug ausgebildet sein.

Wie hierin verwendet, bezieht sich der Begriff "Steuereinheit" auf eine Elektronik, die je nach Ausbildung Steuerungsaufgaben und/oder Regelungsaufgaben übernehmen kann.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigt:

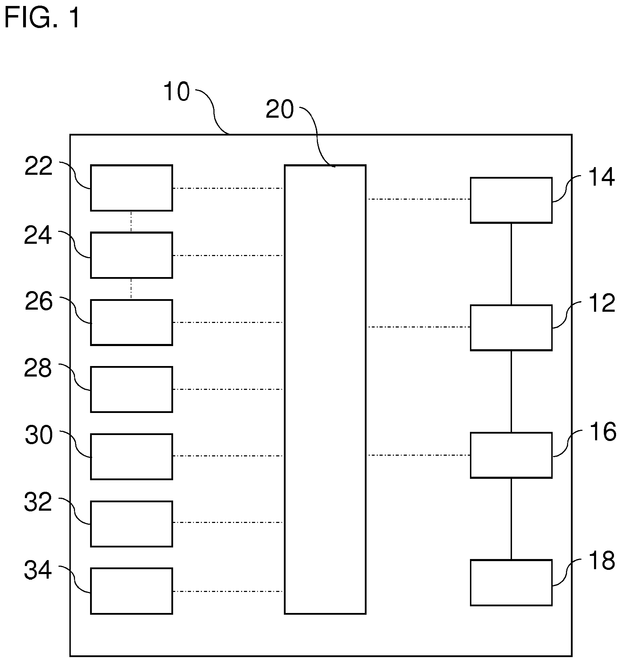

Figur 1     eine schematische Ansicht eines Kraftfahrzeugs gemäß der vorliegenden Offenbarung.

Die Figur 1 zeigt ein schematisch als Block dargestelltes Kraftfahrzeug 10, das zum Ausführen des hierin offenbarten Verfahrens geeignet ist. Das Kraftfahrzeug 10 kann beispielsweise ein Pkw oder ein Nutzfahrzeug, zum Beispiel ein Omnibus oder ein Lastkraftwagen, sein.

Das Kraftfahrzeug 10 weist einen Elektroantrieb 12, eine Traktionsbatterie 14, eine Kupplung 16, angetriebene Räder 18 und eine Steuereinheit 20 auf.

Der Elektroantrieb 12 kann die einzige Antriebsquelle des Kraftfahrzeugs 10 sein. Mit anderen Worten gesagt, das Kraftfahrzeug 10 kann ein reines Elektrofahrzeug (engl. BEV - battery electric vehicle) sein. Es ist allerdings auch möglich, dass der Elektroantrieb 12 nur eine von mehreren Antriebsquellen des Kraftfahrzeugs 10 sein kann. Beispielsweise kann das Kraftfahrzeug 10 ein Hybridelektrofahrzeug (engl. HEV- hybrid electric vehicle) sein, das zusätzlich eine Brennkraftmaschine (nicht dargestellt) zum Antreiben der Räder 18 aufweisen kann.

Der Elektroantrieb 12 ist mit der Traktionsbatterie 14 elektrisch verbunden. Die Traktionsbatterie 14 stellt die zum Antreiben des Elektroantriebs 12 erforderliche elektrische Energie zur Verfügung. Der Elektroantrieb 12 kann auch als Generator zum Laden der Traktionsbatterie 14 verwendet werden. In einigen Ausführungsbeispielen, zum Beispiel bei reinen Elektrofahrzeugen oder sogenannten Plug-In Hybrid-Fahrzeugen (engl. PHEV), kann die Traktionsbatterie 14 zusätzlich extern über einen Stromanschluss am Kraftfahrzeug 10 geladen werden.

Der Elektroantrieb 12 kann einen oder mehrere Elektromotoren aufweisen. Der oder die Elektromotoren können beispielsweise innerhalb des Kraftfahrzeugs 10 aufgenommen sein oder als Radnabenmotoren der Räder 18 ausgebildet sein. Die Räder 18 können angetriebene Räder einer Vorderachse und/oder angetriebene Räder einer Hinterachse des Kraftfahrzeugs 10 sein.

Zum Antreiben des Kraftfahrzeugs 10 stellt die Traktionsbatterie 14 elektrische Energie für den Elektroantrieb 12 zur Verfügung. Der Elektroantrieb 12 wandelt die elektrische Energie in kinetische Energie um und treibt damit über die geschlossene Kupplung 16 die Räder 18 an.

Wie bereits ausgeführt wurde, kann der Elektroantrieb 12 zum Laden der Traktionsbatterie 14 in einem Rekuperationsmodus betrieben werden. Im Rekuperationsmodus wird kinetische Energie, die über die geschlossene Kupplung 16 von den Rädern 18 zugeführt wird, in elektrische Energie umgewandelt. Damit kann der Elektroantrieb 12 als eine Rekuperationseinrichtung zur Energierückgewinnung dienen.

Vorzugsweise ist der Rekuperationsmodus nicht starr sondern variabel mit unterschiedlichen Rekuperationsraten. Zum Beispiel kann der Rekuperationsmodus mit 10 %, 20 %, 30 % und 40 % Rekuperationsrate ausgeführt werden. Beispielsweise wird in einem Rekuperationsmodus 10 % der zur Verfügung stehenden kinetischen Energie in elektrische Energie zum Laden der Traktionsbatterie 14 umgewandelt. Unterschiedliche Rekuperationsraten können beispielsweise mittels Einstellung der Kupplung 16 realisiert werden. Die Kupplung 16 kann bspw. als Viscokupplung ausgeführt sein.

Das Kraftfahrzeug 10 kann zusätzlich in einem Freilaufmodus betrieben werden. Im Freilaufmodus findet keine Rekuperation statt. Im Freilaufmodus wird die Traktionsbatterie 14 nicht geladen. Im Freilaufmodus kann ein minimal möglicher Widerstand im Antriebsstrang des Kraftfahrzeugs 10 bestehen, sodass das Kraftfahrzeug 10 möglichst weit antriebsfrei rollen kann. Beispielsweise kann der Freilaufmodus durch Öffnen der Kupplung 16 realisiert werden. Alternativ oder zusätzlich kann der Freilaufmodus beispielsweise auch durch Abschalten des Elektroantriebs 12 realisiert werden.

Die Steuereinheit 20 steuert einen Betrieb des Elektroantriebs 12, der Traktionsbatterie 14, und der Kupplung 16. Zum Steuern dieser Betriebe kann die Steuereinheit 20 Informationen von verschiedenen Einrichtungen und Systemen des Kraftfahrzeugs 10 empfangen.

Beispielsweise kann die Steuereinheit 20 mit einem Positionsbestimmungssystem 22, einem Navigationssystem 24, einer Kommunikationsschnittstelle 26, einem Kamerasystem 28, einem Abstandssensorsystem 30, einem Neigungssensor 32 und anderen Einrichtungen 34 in Kommunikationsverbindung stehen. Die Kommunikationsverbindungen können drahtlos oder kabelgebunden sein.

Das Positionsbestimmungssystem 22 kann beispielsweise eine GPS (engl. global positioning system)-Vorrichtung sein. Über das Positionsbestimmungssystem 22 kann eine aktuelle Position des Kraftfahrzeugs 10 ermittelt und an die Steuereinheit 20 weitergeleitet werden.

Das Navigationssystem 24 ermöglicht das Planen, Überwachen und Prognostizieren einer Fahrstrecke des Kraftfahrzeugs 10 basierend auf einer von dem Positionsbestimmungssystem 22 ermittelten Position des Kraftfahrzeugs 10. Bspw. können in einem Speicher des Navigationssystems 24 Informationen bezüglich eines Streckennetzes (Straßen, Straßennamen, Kreuzungen usw.), einer Topologie der Straßen (Gefälle, Steigung, Kurvenradius usw.) und Verkehrsregeln auf den Straßen (Geschwindigkeitsbegrenzung, Vorfahrtsregelung usw.) hinterlegt sein. Es ist auch möglich, dass zumindest einige der Informationen über die Kommunikationsschnittstelle 26 des Kraftfahrzeugs 10 von extern empfangen werden. Insbesondere können über die Kommunikationsschnittstelle 26 auch Informationen hinsichtlich einer Straßenverkehrslage (Stau, Verkehrsfluss, Durchschnittsgeschwindigkeit usw.) empfangen werden.

Über die Kommunikationsschnittstelle 26 können weitere Informationen, wie beispielsweise Umgebungsklimainformationen (Umgebungstemperatur, Umgebungsfeuchtigkeit, Sonneneinstrahlung, Regen, Wind usw.) empfangen werden.

Das Kamerasystem 28 kann eine Umgebung des Kraftfahrzeugs 10 vor, neben und/oder hinter dem Kraftfahrzeug 10 bildlich erfassen. Die von dem Kamerasystem 28 gemachten Aufnahmen der Umgebung des Kraftfahrzeugs 10 können einem Bilderkennungssystem zugeführt werden, das die Aufnahmen auswertet. Insbesondere kann das Bilderkennungssystem dazu ausgebildet sein, eine Straßenverkehrslage, eine Straßentopologie, ein Abstand zu einem hinterherfahrenden Fahrzeug und/oder ein Abstand zu einem vorausfahrenden Fahrzeug zu ermitteln.

Es ist beispielsweise auch möglich, dass ein Abstand zu einem vorausfahrenden Fahrzeug und/oder ein Abstand zu einem hinterherfahrenden Fahrzeug mittels des Abstandssensorsystems 30 erfasst wird. Das Abstandssensorsystem 30 kann beispielsweise ein Lidar (engl. light detection and ranging)-System oder ein Radarsystem sein.

Es ist ebenfalls möglich, dass beispielsweise eine Steigung oder ein Gefälle der Straße mittels des Neigungssensors 32 erfasst wird.

In anderen Ausführungsbeispielen können nur einige der Einrichtungen 22 bis 32 und/oder zusätzliche Einrichtungen 34 zum Erfassen von internen oder externen Parametern des Kraftfahrzeugs 10 vorgesehen sein. Die internen oder externen Parameter können relevant bezüglich eines Betriebs des Kraftfahrzeugs in dem Freilaufmodus und den Rekuperationsmodus sein.

Wenn beispielsweise ein Fahrer des Kraftfahrzeugs 10 ein Gaspedal (nicht dargestellt) des Kraftfahrzeugs 10 nicht länger betätigt, wird das Kraftfahrzeug 10 entweder in dem Freilaufmodus oder in dem Rekuperationsmodus betrieben. Durch Auswahl eines für die jeweilige Fahrsituation geeigneten Modus kann eine Reichweite des Kraftfahrzeugs 10 vergrößert werden.

Insbesondere wird hierin vorgeschlagen, jeweils den Modus auszuwählen, der sich von den zur Verfügung stehenden Modi in der aktuellen Fahrsituation energetisch am meisten lohnt.

Um zu ermitteln, welcher der zur Verfügung stehenden Betriebsmodi sich energetisch am meisten in der aktuellen Fahrsituation lohnt, kann eine Energiebilanz und/oder eine Exergiebilanz des Kraftfahrzeugs 10 berücksichtigt werden. Die Energiebilanz und die Exergiebilanz können Fahrzeugdaten und Umgebungsdaten aufweisen. Die Fahrzeugdaten können beispielsweise ein Fahrzeuggewicht, eine Fahrzeugmasse, eine Fahrzeuggeschwindigkeit und eine Fahrzeugbeschleunigung aufweisen. Die Umgebungsdaten können beispielsweise eine Umgebungstemperatur, eine Sonneneinstrahlung, eine Windstärke und eine Windrichtung aufweisen.

Die Energie- und Exergiebilanz basieren auf dem ersten und zweiten Hauptsatz der Thermodynamik unter Berücksichtigung der Umgebungstemperatur. Die Energie- und Exergiebilanz berücksichtigt alle Energie- und Exergieströme des bilanzierten Systems/Subsystem. Die Bilanzzone kann für das Gesamtsystem (Kraftfahrzeugs) und/oder relevante Subsysteme des Gesamtsystems (Kraftfahrzeugs) definiert werden. Durch die Anwendung der Exergiebilanz wird die zur Verfügung stehende Energie qualitativ und quantitativ bewerten. Dadurch entsteht die Möglichkeit der optimalen Anpassung der Freilauf- und der Rekuperationsfunktion abhängig von den lokalen und momentanen Randbedingungen.

Beispielsweise kann die Energiebilanz gemäß dem ersten Hauptsatz der Thermodynamik wie folgt aufgestellt werden.

$$\frac{dE}{d\tau} = \dot{Q} + P + \sum_{zu} \dot{M}_{zu}\left(h_{zu} + \frac{w_{zu}^2}{2} + g z_{zu}\right) - \sum_{ab} \dot{M}_{ab}\left(h_{ab} + \frac{w_{ab}^2}{2} + g z_{ab}\right)$$

mit:

$\dot{Q}$    Wärmestrom
P    Leistung
$\dot{M}$    Massenstrom
h    Spezifische Enthalpie
w    Geschwindigkeit
z    Höhe
g    Erdbeschleunigung

Der Wärmestrom bezieht sich insbesondere auf den summarischen Wärmestrom in der analysierten Bilanzzone, der abgegeben und/oder zugeführt wurde. Hier wird der Einfluss der Umgebungstemperatur, der Sonneneinstrahlung und der Klimaanlage berücksichtigt. Der Massenstrom bezieht sich auf die zu- und abgeführten Massenströme im Kraftfahrzeug, z. B. einen Massenstrom der Bremsflüssigkeit und einen Massenstrom der Kühlluft. Die spezifische Enthalpie dient zur Berücksichtigung der Wärmekapazitäten und Temperaturen der Massenströme. Ferner können die Geschwindigkeiten und die Höhenlagen der Massenströme des Kraftfahrzeugs berücksichtigt werden.

Beispielsweise kann die Exergiebilanz wie folgt aufgestellt werden.

$$\dot{E}x_{zu} = \Delta\dot{E}x + \dot{E}x_{ab} + \sum_{zu}\Delta\dot{E}x_V + P + \delta\dot{E}x_{1-2}$$

mit:

$\dot{E}x_{zu}$    Zugeführter Exergiestrom
$\dot{E}x_{ab}$    Abgeführter Exergiestrom
$\Delta\dot{E}x$    Energiezuwachs des Systems
$\Delta\dot{E}x_V$    Energiezuwachs der externen Wärmequelle
P    Leistung
$\delta\dot{E}x_{1-2}$    Innere Exergieverluste

Der Energiezuwachs des Systems bezieht sich auf den Energiezuwachs des Kraftfahrzeugs in der Bilanzzone. Der Energiezuwachs der externen Wärmequelle bezieht sich auf die Umgebung des Kraftfahrzeugs. Die inneren Exergieverluste berücksichtigen Verluste durch Irreversibilitäten.

Der zugeführte Exergiestrom und der abgeführte Exergiestrom ergeben sich jeweils als Summe des zu- bzw. abgeführten kinetischen, potentiellen und thermischen Exergiestroms.

$$\dot{E}x_i = \dot{E}x_k + \dot{E}x_p + \dot{E}x_t$$

mit:

$\dot{E}x_k$    Kinetischer Exergiestrom
$\dot{E}x_p$    Potentieller Exergiestrom
$\dot{E}x_t$    Thermischer Exergiestrom

Die Energiebilanz und die Exergiebilanz des Kraftfahrzeugs 10 können von der Steuereinheit 20 aufgestellt werden. Hierzu kann die Steuereinheit 20 entsprechende Informationen von den Einrichtungen 22 bis 34 empfangen und/oder auf in einem Speicher der Steuereinheit 20 hinterlegte Informationen referenzieren.

Mittels des Navigationssystems 24 kann eine zukünftige Fahrstrecke des Kraftfahrzeugs 10 prognostiziert (geschätzt) werden. Bspw. kann die zukünftige Fahrstrecke mittels einer von dem Navigationssystem 24 geplanten Fahrtroute zu einem gewünschten Ziel ermittelt werden. Es ist auch möglich, dass das Navigationssystem 24 die Fahrt des Kraftfahrzeugs 10 überwacht und eine wahrscheinliche zukünftige Fahrtstrecke schätzt. Eine vom Verfahren berücksichtigte Streckenlänge der zukünftigen Fahrtstrecke kann in einem Bereich bis zu beispielsweise 500 m, 1 km oder mehr liegen. Es besteht die Möglichkeit, dass die berücksichtigte Streckenlänge der zukünftigen Fahrtstrecke von einem Benutzer einstellbar ist und insbesondere von einer aktuellen Geschwindigkeit des Kraftfahrzeugs 10 abhängt. Umso höher die Geschwindigkeit des Kraftfahrzeugs 10 ist, desto länger kann die berücksichtigte Streckenlänge der zukünftigen Fahrstrecke sein.

Basierend auf der aufgestellten Energiebilanz oder Exergiebilanz des Kraftfahrzeugs 10 kann die Steuereinheit 20 nachfolgend eine Freilaufenergie oder-exergie und eine Rekuperationsenergie oder-exergie auf der zukünftigen Fahrstrecke gemäß der eingestellten Streckenlänge ermitteln. Hierbei können je nach Ausführung des Verfahrens unterschiedliche Informationen zur aktuellen und zukünftigen Fahrsituation des Kraftfahrzeugs 10 für die Berechnung genutzt werden.

Insbesondere können zur Berechnung der Freilaufenergie und -exergie sowie der Rekuperationsenergie und -exergie Informationen hinsichtlich einer momentanen und einer prognostizierten (zukünftigen) Fahrsituation berücksichtigt werden. Hierbei werden insbesondere zukünftige Beschleunigungs- und/oder Verzögerungsbedingungen auf der zukünftigen Fahrstrecke berücksichtigt.

Die momentane Fahrsituation und die zukünftige Fahrsituation des Kraftfahrzeugs können insbesondere eine momentane Straßenverkehrslage und eine prognostizierte zukünftige Straßenverkehrslage innerhalb der prognostizierten zukünftigen Fahrstrecke sowie eine momentane Straßentopologie und eine prognostizierte zukünftige Straßentopologie innerhalb der prognostizierten zukünftigen Fahrstrecke berücksichtigt.

Beispielsweise kann basierend auf der Energiebilanz geschrieben werden:

$$\frac{dE_{ST} + dE_{Reib}}{d\tau} = \dot{Q} + P + \sum_{zu} \dot{M}_{zu}\left(h_{zu} + \frac{w_{zu}^2}{2} + gz_{zu}\right) - \sum_{ab} \dot{M}_{ab}\left(h_{ab} + \frac{w_{ab}^2}{2} + gz_{ab}\right)$$

mit:

$\frac{dE_{ST}}{d\tau} = \dot{E}_{ST}$      Steigungsenergiewiderstand des Kraftfahrzeugs

$\frac{dE_{Reib}}{d\tau} = \Delta E_{Reib}$      Reibenergiewiderstand

Der Steigungsenergiewiderstand berücksichtigt den Widerstand des Kraftfahrzeugs auf einer Steigung bzw. einem Gefälle. Der Reibenergiewiderstand berücksichtigt beispielsweise den Luftwiderstand des Kraftfahrzeugs und den Rollwiderstand des Kraftfahrzeugs beim Rollen auf Asphalt usw.

Der Steigungsenergiewiderstand kann wie folgt ausgedrückt werden.

$$\dot{E}_{ST} = P_{ST} = mg\tan\alpha_{ST}\, v$$

mit:

$m$      Masse des Kraftfahrzeugs
$g$      Erdbeschleunigung
$\alpha_{ST}$      Steigungs- bzw. Gefällewinkel
$v$      Geschwindigkeit des Kraftfahrzeugs

Beim Bremsen bis Null ergibt sich der Reibenergiewiderstand als Differenz aus kinetischer Energie bei aktueller Fahrzeuggeschwindigkeit und kinetischer Energie beim Bremsen bis Null.

$$\Delta E_{Reib} = Fs = E_{KIN}(v) - E_{KIN}(v = 0) = \frac{mv^2}{2}$$

wobei:

$$F = m\mu g$$

mit:

$\mu$      Widerstand des Kraftfahrzeugs (z. B. Luftwiderstand, Rollwiderstand)

Die mögliche Rekuperationsenergie kann dann beispielsweise wie folgt ausgerechnet werden (Beispiel nur mechanisch ohne Enthalpieströme der Fluide für die Bilanzzone).

$$\Delta P = \left( P_{ST}{}^{v=act}_{v=0} - P_{Reib}{}^{v=act}_{v=0} \right) \eta_R$$

mit:

$\eta_R$    Wirkungsgrad der Rekuperation

Die Freilaufenergie kann beispielsweise wie folgt berechnet werden.

$$F = \int_{v1}^{v2} mg \tan \alpha_{ST} \, dv$$

mit:

F        (Prognostizierte) Freilaufenergie
m        Masse des Kraftfahrzeugs
g        Erdbeschleunigung
$\alpha_{ST}$    Steigungs- bzw. Gefällewinkel
$v_1$        Anfangsgeschwindigkeit des Kraftfahrzeugs
$v_2$        (prognostizierte) Endgeschwindigkeit des Kraftfahrzeugs

Basierend auf der aufgestellten beispielhaften Exergiebilanz können ebenfalls die Freilaufexergie und die Regenerationsexergie berechnet werden.

Für einen Betrieb des Kraftfahrzeugs unter Freilaufbedingungen (Segelbetrieb) ohne zu erwartende Bremsung gilt dann, dass, wenn die Rekuperationsenergie auf einer prognostizierten Strecke geringer ist als die Energie der Freilauffunktion unter der Annahme, dass die Fahrzeuggeschwindigkeit konstant bleibt, ist, die Freilauffunktion realisiert wird.

Für einen Betrieb unter sogenannten Stop-And-Go-Bedingungen kann hingegen immer die Rekuperation eingeschaltet werden, ohne Energieverbrauch für den Antrieb beim Bremsen. Der Rekuperationsgrad kann so eingestellt werden, dass das Fahrzeug von einem Punkt A zu einem Punkt B (z. B. Ampel) ohne zusätzlichen Energieverbrauch für den Antrieb fährt und bremst (rekuperiert).

Beispielsweise wird für eine prognostizierte zukünftige Fahrstrecke von 1 km vor dem Kraftfahrzeug 10 auf einer Fernstraße, zum Beispiel einer Autobahn oder Landstraße, ermittelt, dass insbesondere keine Staus oder andere Hindernisse, die eine Bremsung des Kraftfahrzeugs 10 erfordern, liegen. Hier kann die Steuereinheit 20 beispielsweise eine Freilaufenergie und/oder -exergie ermitteln, die größer als eine Rekuperationsenergie und/oder -exergie ist. Folglich kann das Kraftfahrzeug 10 im Freilaufmodus betrieben werden, wenn das Gaspedal und die Bremse nicht betätigt werden.

In einem anderen Beispiel wird für eine prognostizierte zukünftige Fahrstrecke von 500 m vor dem Kraftfahrzeug 10 auf einer Fernstraße ermittelt, dass insbesondere eine Steigung vor dem Kraftfahrzeug 10 liegt. Hier kann die Steuereinheit 20 beispielsweise bestimmen, dass ein Betreiben des Kraftfahrzeugs 10 in einem Rekuperationsmodus energetisch nicht sinnvoll ist, da das Rekuperieren das Kraftfahrzeug 10 vor der Steigung zusätzlich abbremst. Stattdessen kann das Kraftfahrzeug 10 im Freilaufmodus betrieben werden.

In einem weiteren anderen Beispiel wird ermittelt, dass ein Stau vor dem Kraftfahrzeug 10 liegt. Hier kann die Steuereinheit 20 beispielsweise bestimmen, dass das Betreiben des Kraftfahrzeugs 10 in dem Rekuperationsmodus energetisch sinnvoller als das Betreiben in dem Freilaufmodus ist.

Vorzugsweise können zusätzlich momentane und zukünftige Verkehrsregeln berücksichtigt werden. Bspw. kann ermittelt werden, dass ein Gefälle vor dem Kraftfahrzeug 10 liegt und das Kraftfahrzeug 10 bereits mit einer Geschwindigkeit fährt, die einer gesetzlichen Höchstgeschwindigkeit auf diesem Streckenabschnitt entspricht. Demnach kann die Steuereinheit 20 bestimmen, dass ein Betreiben des Kraftfahrzeugs 10 im Freilaufmodus energetisch nicht sinnvoll ist, da der Fahrer das Kraftfahrzeug 10 bei Überschreiten der Höchstgeschwindigkeit selbst bremsen wird. Stattdessen kann das Kraftfahrzeug 10 hier in einem geeigneten Rekuperationsmodus betrieben werden, der insbesondere so ausgeführt ist, dass das Kraftfahrzeug 10 beim Befahren des Gefälles im Wesentlichen weder beschleunigt noch verzögert.

Bevorzugt können zusätzlich Aspekte der Fahrsicherheit berücksichtigt werden. Beispielsweise kann ein Abstand zu einem vorausfahrenden Fahrzeug und/oder zu einem hinterherfahrenden Fahrzeug mittels des Kamerasystems 28 und/oder des Abstandssensorsystems 30 ermittelt werden. Bei zu geringen Abständen zum vorausfahrenden Fahrzeug, zum Beispiel bei Unterschreiten eines geschwindigkeitsabhängigen Abstandsgrenzwerts, ist das Betreiben des Kraftfahrzeugs in einem Rekuperationsmodus aus Fahrsicherheitsüberlegungen her sinnvoller als das Betreiben des Kraftfahrzeugs in dem Freilaufmodus. Bei zu geringen Abständen zum hinterherfahrenden Fahrzeug, zum Beispiel bei Unterschreiten eines geschwindigkeitsabhängigen Abstandsgrenzwerts, ist das Betreiben des Kraftfahrzeugs in dem Freilaufmodus aus Fahrsicherheitsüberlegungen her sinnvoller.

Wenn der Rekuperationsmodus ausgewählt wird, kann zusätzlich der Rekuperationsmodus basierend auf den zur Verfügung stehenden Daten mit Blick auf eine variable Rekuperationsrate eingestellt werden. Somit kann eine besonders geeignete Rekuperation ausgeführt werden, z. B. eine besonders hohe Rekuperation, wenn eine große Verzögerung des Kraftfahrzeugs erforderlich ist oder wird.

Beispielsweise können variable Rekuperationsraten durch eine geeignete Kupplung, die zwischen der Rekuperationseinrichtung und mindestens einem Rad trieblich angeordnet ist, eingestellt werden. Somit können Drehzahldifferenten zwischen An- und Abtrieb an der Kupplung eingestellt werden. Die Kupplung kann beispielsweise als Viscokupplung ausgeführt sein.

Wie vorstehend ausgeführt ist, basiert das Verfahren auf einem prädiktiven System, mit dem versucht wird, eine zukünftige Fahrsituation des Kraftfahrzeugs 10 insbesondere mit Blick auf die Straßenverkehrslage und die Straßentopologie zu prognostizieren.

Es ist auch möglich, dass das prädiktive System ein selbstlernendes System, das bspw. auf einem künstlichen neuronalen Netz basiert, ist.

Es ist möglich, durch die Anwendung eines künstlichen neuronalen selbstlernenden Regelungssystems die Zielfunktion (Zielgröße: Freilauf und/oder Rekuperation) zu optimieren und in einem gewissen Bereich zu korrigieren, unter Berücksichtigung der möglichen Korrektur der Datenzuführung des Steuergeräts.

Der mathematische Zusammenhang zwischen den Werten der Eingangsgrößen und den Ausgangswerten kann beispielsweise im Rahmen einer Korrelationsanalyse bei Optimierung einer Zielfunktion ermittelt und zum Trainieren des künstlichen neuronalen Netzes verwendet werden, wobei die Zielfunktion auf die Entscheidung Freilaufmodus oder Rekuperationsmodus gerichtet ist.

Die mehreren Eingangsgrößen des neuronalen Netzes können die hierin genannten Fahrzeugdaten und Umgebungsdaten umfassen. Ferner werden die Knoten des künstlichen neuronalen Netzes basierend auf einer Korrelation zwischen den Werten der Eingangsgrößen und den Ausgangswerten vorgegeben, wobei die Korrelation durch Optimierung eines summarischen Energieverbrauchs des Fahrzeugs mit Blick auf die Entscheidung Freilaufmodus oder Rekuperationsmodus bestimmt wird.

Das neuronale Netz kann eine dem Problem angepasste Struktur aufweisen. Seine Parameter werden durch die bestimmte Korrelation zwischen den Werten der Eingangsgrößen und den Ausgangswerten automatisch bestimmt. Verfahren zum Trainieren und zur Implementierung des neuronalen Netzes sind für Regelungstechniker standardmäßig bekannt.

Es wird betont, dass im Rahmen der Erfindung auch die Möglichkeit besteht, statt einer Korrelationsmatrix den Korrelationszusammenhang als Funktionen vorzugeben, die in den Knoten des neuronalen Netzes als sogenannte Aktivierungsfunktionen hinterlegt sind. Dies hat den Vorteil, dass Zwischenwerte von Eingangswerten nicht interpoliert, sondern direkt anhand der hinterlegten Funktionen bestimmt werden können.

## Bezugszeichenliste

| | |
|---|---|
| 10 | Kraftfahrzeug |
| 12 | Elektrische Antriebseinheit (hier auch Rekuperationseinrichtung) |
| 14 | Traktionsbatterie |
| 16 | Kupplung |
| 18 | Räder |
| 20 | Steuereinheit |
| 22 | Positionsbestimmungssystem |
| 24 | Navigationssystem |
| 26 | Kommunikationsschnittstelle |
| 28 | Kamerasystem |
| 30 | Abstandssensorsystem |
| 32 | Neigungswinkelsensor |
| 34 | Weitere Einrichtungen |

**Patentansprüche**

1. Verfahren zum Betreiben eines Kraftfahrzeugs (10) mit einer Traktionsbatterie (14) zum Antreiben des Kraftfahrzeugs (10) und einer Rekuperationseinrichtung (12) zum Laden der Traktionsbatterie (14) durch Energierückgewinnung, aufweisend:

   Bereitstellen eines Rekuperationsmodus der Rekuperationseinrichtung (12) zum Laden der Traktionsbatterie (14);
   Bereitstellen eines Freilaufmodus des Kraftfahrzeugs (10) ohne Rekuperation der Rekuperationseinrichtung (12);
   Auswählen eines Betriebsmodus des Kraftfahrzeugs (10) aus dem Freilaufmodus und dem Rekuperationsmodus in Abhängigkeit von einer Energiebilanz und/oder einer Exergiebilanz der Kraftfahrzeugs (10), wobei die Energiebilanz und/oder die Exergiebilanz des Kraftfahrzeugs (10) Fahrzeugdaten und Umgebungsklimadaten, die eine Umgebungstemperatur und eine Sonneneinstrahlung aufweisen, aufweist, wobei das Auswählen des Betriebsmodus aufweist:

   - Prognostizieren einer zukünftigen Fahrstrecke des Kraftfahrzeugs (10) mit zukünftigen Beschleunigungs- und/oder Verzögerungsbedingungen auf der zukünftigen Fahrstrecke, wobei die zukünftigen Beschleunigungs- und/oder Verzögerungsbedingungen auf der zukünftigen Fahrstrecke in Abhängigkeit von einer Straßenverkehrslage, einer Straßentopologie, mindestens einer Verkehrsregel, einem Abstand zu einem vorausfahrenden Fahrzeug und einem Abstand zu einem hinterherfahrenden Fahrzeug prognostiziert werden;
   - Ermitteln einer Freilaufenergie und/oder einer Freilaufexergie zum Zurücklegen der prognostizierten zukünftigen Fahrstrecke;
   - Ermitteln einer Rekuperationsenergie und/oder einer Rekuperationsexergie zum Zurücklegen der prognostizierten zukünftigen Fahrstrecke; und
   - Auswählen des Betriebsmodus in Abhängigkeit von der ermittelten Freilaufenergie und/oder der ermittelten Freilaufexergie sowie der ermittelten Rekuperationsenergie und/oder der ermittelten Rekuperationsexergie; und

   Betreiben des Kraftfahrzeugs (10) in dem ausgewählten Betriebsmodus.

2. Verfahren nach Anspruch 1, wobei:

   eine momentane Straßentopologie von einem Neigungssensor (32) des Kraftfahrzeugs (10) erfasst wird; und/oder
   eine momentane Straßenverkehrslage, eine momentane Straßentopologie, ein momentaner Abstand zu einem dem Kraftfahrzeug (10) hinterherfahrenden Fahrzeug und/oder ein momentaner Abstand zu einem dem Kraftfahrzeug (10) vorausfahrenden Fahrzeug von einem Kamerasystem (28) des Kraftfahrzeugs (10) erfasst wird.

3. Verfahren nach einem der vorherigen Ansprüche, wobei:
   das Auswählen eines Betriebsmodus von einem prädiktiven System ausgeführt wird.

4. Verfahren nach Anspruch 3, wobei:

   das prädiktive System selbstlernend oder nicht-selbstlernend ist; und/oder
   das prädiktive System ein künstliches neuronales Netz aufweist.

5. Verfahren nach einem der vorherigen Ansprüche, wobei:
   das Auswählen eines Betriebsmodus von einem Verschleißzustand des Kraftfahrzeugs (10) abhängt.

6. Kraftfahrzeug (10), insbesondere Nutzfahrzeug, mit einer Steuereinheit (20), die zum Ausführen des Verfahrens nach einem der vorherigen Ansprüche ausgebildet ist.

**Claims**

1. A method for operating a motor vehicle (10) having a traction battery (14) for driving the motor vehicle (10) and having a recuperation device (12) for charging the traction battery (14) by way of energy recovery, comprising:

> providing a recuperation mode of the recuperation device (12) for charging the traction battery (14);
> providing a freewheeling mode of the motor vehicle (10) without recuperation of the recuperation device (12);
> selecting an operating mode of the motor vehicle (10) from the freewheeling mode and the recuperation mode in dependence on an energy balance and/or an exergy balance of the motor vehicle (10), wherein the energy balance and/or the exergy balance of the motor vehicle (10) comprises vehicle data and ambient climate data which comprise an ambient temperature and a solar radiation, wherein the selecting of the operating mode comprises:
>
>> - predicting a future driving route of the motor vehicle (10) with future acceleration and/or deceleration conditions on the future driving route, wherein the future acceleration and/or deceleration conditions on the future driving route are predicted in dependence on a road traffic situation, a road topology, at least one traffic rule, a distance to a vehicle travelling ahead and a distance to a vehicle travelling behind;
>> - ascertaining a freewheeling energy and/or a freewheeling exergy for covering the predicted future driving route;
>> - ascertaining a recuperation energy and/or a recuperation exergy for covering the predicted future driving route; and
>> - selecting the operating mode in dependence on the ascertained freewheeling energy and/or the ascertained freewheeling exergy and also the ascertained recuperation energy and/or the ascertained recuperation exergy; and
>> - operating the motor vehicle (10) in the selected operating mode.

2. The method according to Claim 1, wherein:

> a present road topology is detected by an inclination sensor (32) of the motor vehicle (10); and/or
> a present road traffic situation, a present road topology, a present distance to a vehicle travelling behind the motor vehicle (10) and/or a present distance to a vehicle travelling ahead of the motor vehicle (10) is detected by a camera system (28) of the motor vehicle (10).

3. The method according to either of the preceding claims, wherein:
the selecting of an operating mode is executed by a predictive system.

4. The method according to Claim 3, wherein:

> the predictive system is self-learning or non-self-learning; and/or
> the predictive system comprises an artificial neural network.

5. The method according to one of the preceding claims, wherein:
the selecting of an operating mode is dependent on a wear state of the motor vehicle (10).

6. A motor vehicle (10), in particular a utility vehicle, having a control unit (20) which is designed for executing the method according to one of the preceding claims.

**Revendications**

1. Procédé de fonctionnement d'un véhicule automobile (10) comprenant une batterie de traction (14) destinée à entraîner le véhicule automobile (10) et un dispositif de récupération (12) destiné à charger la batterie de traction (14) par récupération d'énergie, ledit procédé comportant les étapes suivantes :

> fournir un mode de récupération du dispositif de récupération (12) pour charger la batterie de traction (14) ;
> fournir un mode roue libre du véhicule automobile (10) sans récupération du dispositif de récupération (12) ;
> sélectionner un mode de fonctionnement du véhicule automobile (10) parmi le mode roue libre et le mode récupération en fonction d'un bilan énergétique et/ou d'un bilan exergétique du véhicule automobile (10), le bilan énergétique et/ou le bilan exergétique du véhicule automobile (10) comportant des données de véhicule et des données climatiques environnementales qui représentent une température ambiante et une exposition solaire, la sélection du mode de fonctionnement comportant les étapes suivantes :

- prédire un futur itinéraire du véhicule automobile (10) avec des conditions d'accélération et/ou de décélération futures sur le futur itinéraire, les futures conditions d'accélération et/ou de décélération sur le futur itinéraire étant prédites en fonction d'une situation de circulation routière, d'une topologie routière, d'au moins une règle de circulation, d'une distance à un véhicule précédent et d'une distance à un véhicule suivant ;

- déterminer une énergie de roue libre et/ou une exergie de roue libre pour parcourir le futur itinéraire prédit ;

- déterminer une énergie de récupération et/ou une exergie de récupération pour parcourir le futur itinéraire prédit ; et

- sélectionner le mode de fonctionnement en fonction de l'énergie de roue libre déterminée et/ou de l'exergie de roue libre déterminée et de l'énergie de récupération déterminée et/ou de l'exergie de récupération déterminée ; et faire fonctionner le véhicule automobile (10) dans le mode de fonctionnement sélectionné.

2. Procédé selon la revendication 1 :

une topologie routière instantanée étant détectée par un capteur d'inclinaison (32) du véhicule automobile (10) ; et/ou

une situation de circulation routière instantanée, une topologie routière instantanée, une distance instantanée à un véhicule roulant derrière le véhicule automobile (10) et/ou une distance instantanée à un véhicule roulant devant le véhicule automobile (10) étant détectées par un système de caméra (28) du véhicule automobile (10).

3. Procédé selon l'une des revendications précédentes :
la sélection d'un mode de fonctionnement étant effectuée par un système prédictif.

4. Procédé selon la revendication 3 :

le système prédictif étant auto-apprenant ou non-auto-apprenant ; et/ou
le système prédictif comportant un réseau de neurones artificiels.

5. Procédé selon l'une des revendications précédentes :
la sélection d'un mode de fonctionnement dépendant d'un état d'usure du véhicule automobile (10).

6. Véhicule automobile (10), notamment véhicule utilitaire, comprenant une unité de commande (20) qui est conçue pour mettre en œuvre le procédé selon l'une des revendications précédentes.

EP 3 495 193 B1

FIG. 1

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012224170 A1
- DE 112013004514 T5
- US 20160052519 A1
- US 2015061550 A1
- DE 102015201904 A1
- US 2011309926 A1
- CA 2997232 A1